Europäisches Patentamt

European Patent Office

Office européen des brevets

(11) Publication number: **0 304 533 B1**

# EUROPEAN PATENT SPECIFICATION

(45) Date of publication of patent specification: 03.07.91    (51) Int. Cl.⁵: **F24C 15/20, B01D 45/08**

(21) Application number: 87850261.6

(22) Date of filing: 28.08.87

(54) **Filter unit for range ventilators of so-called labyrinth filter type.**

(43) Date of publication of application:
01.03.89 Bulletin 89/09

(45) Publication of the grant of the patent:
03.07.91 Bulletin 91/27

(84) Designated Contracting States:
AT BE CH DE FR GB IT LI NL

(56) References cited:
EP-A- 0 007 385        DE-A- 2 649 154
DE-U- 8 307 964        DE-U- 8 321 475
DE-U- 8 602 730        GB-A- 2 116 873

(73) Proprietor: **Futurumverken AB**
**Box 9**
**S-93047 Byske(SE)**

(72) Inventor: **Forssén, Martin**
**Byalagsgatan 7**
**S-93400 Kage(SE)**

(74) Representative: **Hammar, Ernst et al**
**H. ALBIHNS PATENTBYRA AB P.O. Box 3137**
**S-103 62 Stockholm(SE)**

## Description

The present invention relates to a filter unit for ventilators, especially kitchen range ventilators, comprising air intake openings along the edges of the unit, and air deflector means comprising staggered rows of pin-like elements arranged parallel to the edges of the unit and extending perpendicular to the bottom plane of the unit.

Such so-called labyrinth filters have been known for quite some time and are characterized by being particularly simple to clean. They have also the great advantage of being impossible to clog.

The filtering function of filters of this type is achieved by virtue of the fact that the incoming air strikes air deflection means on which drops of grease are deposited which can no longer be retained by the intake air when its speed has been decreased.

Such a filter unit is described in applicant's own DE-U-8602730, which filter unit has the feature described above by way of introduction.

The present invention has the purpose of achieving a filter unit of the above-mentioned type with improved filtering efficiency.

This is achieved by a filter unit having the characteristics described in claim 1. The outwardly inclined walls of the upper section provide on the one hand a vertical deflection of the airflow and on the other hand a non-homogeneous velocity profile for the air in that portion of the flow path which is limited by said walls and the corresponding portion of the bottom plate. This increases the interference between the various airflow components contributing to increasing the number of times that the intake air strikes the air deflection means. The risk that a portion of the airflow could pass through the filter unit filtering section without striking a deflecting means is at the same time decreased in comparison to the filter unit known by the above-mentioned European patent application.

These and other advantages and characteristics are revealed in more detail in the following description of a preferred embodiment of a filter unit according to the invention, reference being made to the accompanying drawings of which:

Fig 1 shows a perspective view of a filter unit according to the invention,

Fig 2 shows a perspective view of the filter unit in Fig 1,

Fig 3 shows a view from below of a bottom section in the filter unit in Fig 1,

Fig 4 shows a section along the line IV-IV in Fig 1,

Fig 5 shows a section along the line V-V in Fig 1, and

Fig 6 shows a section along the line VI-VI in Fig.

1.

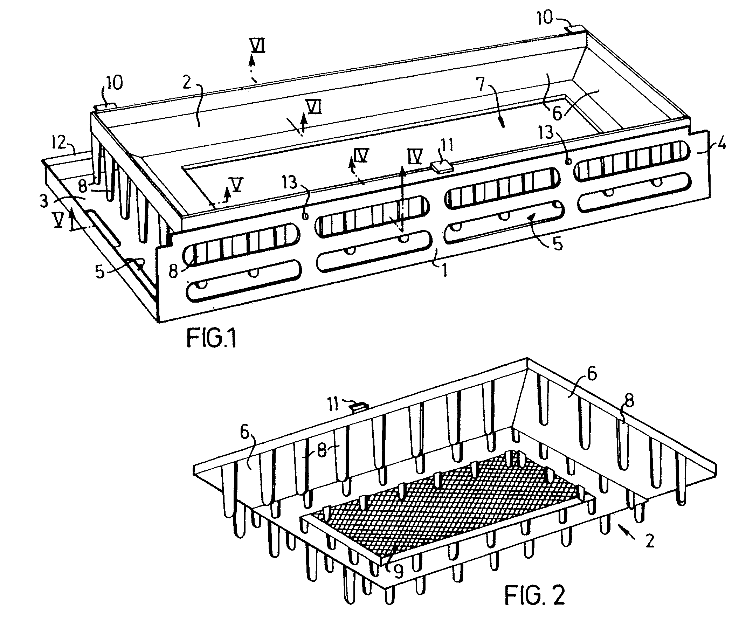

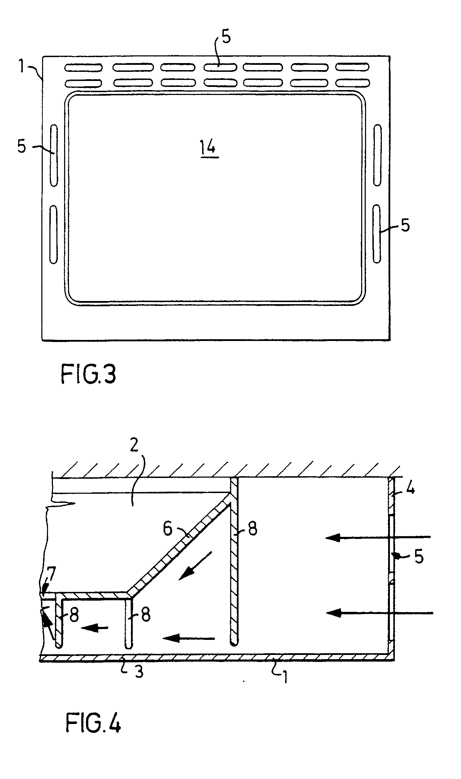

The filter unit shown in Fig 1 consists of a bottom section 1 and a top section 2, each being easily detachably connected to a hood (not shown) of a range ventilator. The bottom section consists essentially of a bottom plate 3 and a wall portion 4 extending upwards from the bottom plate, said wall portion constituting the front of the filter unit. Along the edges of the bottom plate the bottom section 1 has edge flanges which serve to make the unit more rigid and to prevent dripping. The air intake openings 5 are arranged in the bottom section parallel to these edges, firstly in the bottom plate along the rear edge and the side edges as can be seen in Fig 3, and secondly in the wall portion 4 as can be seen in Fig 1.

The top section 2 has the shape of a trough with outwardly inclined sides 6. As was mentioned above, the top section 2 is detachably connected to a hood section (not shown) and thus covers the intake duct for the fan impeller, and thus the interior of this trough is in communication with this intake duct. Furthermore, the bottom of the trough is provided with an opening 7. Intake air can thus flow through the intake openings 5 via the space defined by the exterior of the top section, the interior of the bottom section and the walls of the ventilator hood surrounding the filter unit, into the interior of the top section and from there to the ventilator intake duct.

Staggered rows of pin elements 8 are arranged in the peripheral area between the edges of the opening 7 and the inner edges of the intake openings 5. These rows run in parallel to the respective edges of the filter unit. In the example shown, the elements 8 are joined to the top section 2 but could just as well have been fixed to the bottom plate 3.

The bottom opening 7 in the top section, as shown in Fig 2, is preferably covered by a screen 9.

The means 10,11 for detachably fixing the top section 2 in the ventilator hood (not shown) suitably comprise two rearwardly directed tabs 10 at the rear edge of the upper section and an upright hook 11 on the front edge. For mounting, the tabs 10 are inserted under cooperating tabs or the like in corresponding parts of the ventilator hood, whereafter the hook 11 is snapped into a corresponding cavity in the ventilator hood. The front wall of the top section is thus sufficiently flexible for the hook 11 to be pressed into its cavity in the ventilator hood. When the hook 11 has been snapped into the appropriate cavity, it is held in the position by the natural spring force of the front wall of the top section.

Corresponding mounting means in the bottom section 1 consists of a rearwardly directed flange 12 along the rear edge and bosses 13 on the front edge.

Fig 4 shows the duct created by the top and bottom sections, through which air flows which has entered through the intake openings 5 of the upwardly directed wall portion 4 of the bottom section. The direction of the airflow is indicated schematically by the arrows in the Figure. By virtue of the fact that the cross section of this duct narrows sharply due to the configuration of the top section, the intake air will be rapidly accelerated when passing the portion of the top section with the outwardly inclined wall 6. Furthermore, due to the effect of the wall 6, an asymmetrical flow pattern arises since the air along the wall 6 flows at a higher velocity than the air along the bottom plate 3. During its passage from the intake openings 5 to the intake duct of the fan impeller, portions of the air strike the deflector elements 8. The velocity of this air is thus reduced and it leaves grease droplets on these elements. At the same time a lateral deflection is achieved in those portions of the intake air adjacent said elements 8. It will be understood that this deflection effect is greater the higher the velocity is of the air striking the element 8. As the wall 6 deflects the airflow downwards, portions of this air will strike this wall and leave drops of grease thereupon. In this connection it should be pointed out that residual grease drops running down this wall 6 and the deflector element 8 will of course affect the layers of turbulence created thereon, and therefore the deflection effects for the air will vary somewhat during operation at the same time as entirely stable layers of turbulence will not arise.

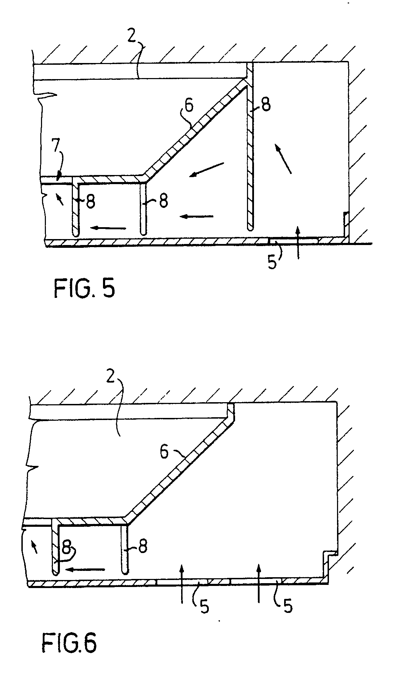

Fig 5 shows a corresponding side duct in the filter unit. By virtue of the fact that the air taken in through the intake openings 5 will flow vertically into this duct, those portions of this air striking the wall 6 will strike more nearly perpendicularly against this wall than what was the case for the airflow according to Fig 4. This means that the air closest to the wall will be more sharply retarded, resulting in a thicker turbulent layer arising near the wall 6 in the side duct as compared to the front duct, and this facilitates the horizontal deflection of the air flowing in vertically through the side air intake openings 5.

Fig 6 shows the duct along the rear edge of the filter element. As can be seen from the Figure, only two rows of air deflecting elements 8 are arranged downwardly directed from the bottom portion of the top section along the rear edge.

The outwardly inclined wall 6 thus fulfills several functions. Along the front and rear edges, it compresses the incoming airflow, thus increasing the air velocity and the deflection and filtering effects of the deflector elements 8. Along the side edges and the rear edge, this also facilitates the transition from vertical to horizontal flow. Furthermore, the wall 6 constitutes a grease collecting surface.

As can be seen in Fig 3, the bottom portion of the bottom section 1 has a depression lying inside the intake openings 5, which forms a collecting bowl 14 for drops of grease running down from the air deflector elements 8 and the outer wall 6 of the top section.

At the same time as the screen 9 can collect any remaining grease droplets in the air flowing through the opening 7 in the bottom of the top section, its primary function is to even out the differences in air velocities of the air drawn into the impeller intake duct. This considerably decreases non-homogeneous loads on this impeller, increasing its life and resulting in quieter operation.

The dimensions of the intake openings 5 depend on the desired intake airflow, and in this respect only the total intake area is of interest. For considerations of strength, it was decided in the example shown to achieve the acquired intake area by providing a plurality of openings along each edge of the bottom section, but this choice is in no way intended to be limiting. The air intake openings along the rear and side edges can also be accomplished by providing a space between the outer edges of the bottom plate and corresponding parts of the ventilator hood and the wall portion 4 can constitute a part of said hood.

The filter unit described here can be modified in many ways. The inclination for example of the outwardly inclined walls of the top section can thus be different than the prefered angle of 45° and the rear edge of the top section can be provided with an additional row of air deflector elements. Furthermore, the exterior surfaces of the walls 6 can be rough and have a curved shape along the side edges. The filter element need not be of rectangular shape.

## Claims

1. Filter unit for ventilators, especially kitchen range ventilators, comprising air intake openings (5) along the edges of the unit, and air deflector means (8) comprising staggered rows of pin-like elements arranged parallel to the edges of the unit and extending perpendicular to the bottom plane of the unit, characterized in that the filter unit consists of a bottom section (1) and a top section (2), each being easily detachably attached to the hood of the ventilator in question, that the air intake openings (5) are arranged so that air flows essentially vertically through the openings along the rear and side edges and essentially horizontally through the front opening of the unit, which front opening is contained in a vertical wall portion (4), that the top section (2) has the shape of a trough with an opening (7) in its bottom portion and walls (6) inclined outwards relative to said opening and having a vertical dimension which is less than the height of said vertical wall portion (4), that the bottom plane of the bottom section lies in the same plane as the lower edge of said wall portion (4), whereby the top and bottom sections of the filter unit together define air intake ducts, which are tapered in the region of the inclined walls (6) of the top section, and that the air deflecting means (8) are fixed either to the top section or to the bottom section within the peripheral area defined by the air intake openings (5) of the bottom section (1) and the edges of the opening (7) in the top section.

2. Filter unit according to Claim 1,
   characterized in that the deflector means (8) are arranged within the inner limits of the air intake openings (5).

3. Filter unit according to Claim 1,
   characterized in that the bottom portion of the top section (2) consists of a flat plate with a central opening (7) of the same shape as the flat plate but with smaller dimensions.

4. Filter unit according to Claim 1,
   characterized in that the opening (7) in the bottom portion of the top section (2) is covered by a wire screen (9).

5. Filter unit according to Claim 1,
   characterized in that the exterior sides of the outwardly inclined walls (6) of the top section (2) have a rough surface.

6. Filter unit according to Claim 1,
   characterized in that the side walls of the top section (2) have essentially a different inclination than the front and rear walls.

7. Filter unit according to Claim 1,
   characterized in that the side walls of the top section (2) are curved.

**Revendications**

1. Unité de filtre pour des ventilateurs, en particulier des ventilateurs de fourneau de cuisine, comprenant des ouvertures d'entrée d'air (5) le long des bords de l'unité, et des moyens de déflexion d'air (8) comprenant des rangées décalées d'éléments en forme de tiges disposés parallèlement aux bords de l'unité, et s'étendant perpendiculairement au plan inférieur de l'unité, caractérisée en ce qu'elle comprend une section inférieure (1) et une section supérieure (2), chacune d'elles étant fixée de manière aisément détachable à la hotte du ventilateur considéré, en ce que les ouvertures d'entrée d'air (5) sont disposées de façon que l'air circule de façon pratiquement verticale à travers les ouvertures, le long des bords arrière et latéraux, et de manière pratiquement horizontale à travers l'ouverture avant de l'unité, cette ouverture avant étant contenue dans une partie de paroi verticale (4), en ce que la section supérieure (2) a la forme d'une cuvette avec une ouverture (7) dans sa partie inférieure, et des parois (6) inclinées vers l'extérieur par rapport à l'ouverture précitée, et ayant une dimension verticale qui est inférieure à la hauteur de la partie de paroi verticale (4), en ce que le plan inférieur de la section inférieure coïncide avec le plan du bord inférieur de la partie de paroi précitée (4), grâce à quoi les sections supérieure et inférieure de l'unité de filtre définissent conjointement des conduits d'entrée d'air, qui vont en diminuant dans la région des parois inclinées (6) de la section supérieure, et en ce que les moyens de déflexion d'air (8) sont fixés soit à la section supérieure, soit à la section inférieure, à l'intérieur de la zone périphérique qui est définie par les ouvertures d'entrée d'air (5) de la section inférieure (1) et par les bords de l'ouverture (7) qui est formée dans la section supérieure.

2. Unité de filtre selon la revendication 1, caractérisée en ce que les moyens de déflexion (8) sont disposés dans les limites intérieures des ouvertures d'entrée d'air (5).

3. Unité de filtre selon la revendication 1, caractérisée en ce que la partie inférieure de la section supérieure (2) consiste en une plaque plane comportant une ouverture centrale (7) qui a la même forme que la plaque plane mais des dimensions inférieures.

4. Unité de filtre selon la revendication 1, caractérisée en ce que l'ouverture (7) qui est formée dans la partie inférieure de la section supérieure (2) est recouverte par un écran en treillis (9).

5. Unité de filtre selon la revendication 1, caractérisée en ce que les côtés extérieurs des parois (6) inclinées vers l'extérieur de la section supérieure (2) ont une surface rugueuse.

6. Unité de filtre selon la revendication 1, caractérisée en ce que les parois latérales de la section supérieure (2) ont fondamentalement une inclinaison différente de celle des parois avant et arrière.

7. Unité de filtre selon la revendication 1, caractérisée en ce que les parois latérales de la section supérieure (2) sont courbées.

**Ansprüche**

1. Filtereinheit für Entlüfter, insbesondere Küchen-Dunstabzugshauben, mit längs der Ränder der Einheit vorgesehenen Luftansaugöffnungen (5) und Luftablenkmitteln (8) in Form von gegeneinander versetzten Reihen von zapfenartigen Elementen, die parallel zu den Rändern der Einheit angeordnet sind und senkrecht zur Bodenebene der Einheit verlaufen, dadurch gekennzeichnet, daß die Filtereinheit aus einem Bodenteil (1) und einem Oberteil (2) besteht, die jeweils leicht abnehmbar an der Haube des betreffenden Entlüfters angebracht sind, daß die Luftansaugöffnungen (5) so angeordnet sind, daß Luft im wesentlichen lotrecht durch die Öffnungen längs der Rückseite und Seitenränder und im wesentlichen waagerecht durch die in einem lotrechten Wandabschnitt (4) vorgesehene vordere Öffnung der Einheit strömt, daß der Oberteil (2) die Form einer Wanne mit einer Öffnung (7) in seinem Bodenabschnitt sowie relativ zur Öffnung auswärts geneigten Wänden (6) eines lotrechten Maßes, das kleiner ist als die Höhe des lotrechten Wandabschnitts (4), aufweist, daß die Bodenebene des Bodenteils in der gleichen Ebene liegt wie die Unterkante des Wandabschnitts (4), so daß Oberund Bodenteile der Filtereinheit zusammen Luftansaugschächte festlegen, die sich im Bereich der geneigten Wände (6) des Oberteils verjüngen, und daß die Luftablenkmittel (8) entweder am Oberteil oder am Bodenteil innerhalb des durch die Luftansaugöffnungen (5) des Bodenteils (1) und die Ränder der Öffnung (7) im Oberteil festgelegten Umfangsbereichs befestigt sind.

2. Filtereinheit nach Anspruch 1, dadurch gekennzeichnet, daß die Ablenkmittel (8) innerhalb der inneren Grenzen der Luftansaugöffnungen (5) angeordnet sind.

3. Filtereinheit nach Anspruch 1, dadurch gekennzeichnet, daß der Bodenabschnitt des Oberteils (2) aus einer flachen Platte mit einer zentralen Öffnung (7), welche die gleiche Form wie die flache Platte, aber kleinere Abmessungen (als diese) besitzt, besteht.

4. Filtereinheit nach Anspruch 1, dadurch gekennzeichnet, daß die Öffnung (7) im Bodenabschnitt des Oberteils (2) mit einem Drahtsieb (9) verschlossen ist.

5. Filtereinheit nach Anspruch 1, dadurch gekennzeichnet, daß die Außenseiten der auswärts geneigten Wände (6) des Oberteils (2) eine rauhe Oberfläche aufweisen.

6. Filtereinheit nach Anspruch 1, dadurch gekennzeichnet, daß die Seitenwände des Oberteils (2) im wesentlichen eine von der Neigung der vorderen und hinteren Wände verschiedene Neigung aufweisen.

7. Filtereinheit nach Anspruch 1, dadurch gekennzeichnet, daß die Seitenwände des Oberteils (2) gekrümmt sind.

FIG.1

FIG. 2

FIG.3

FIG.4

FIG. 5

FIG.6